# EUROPEAN PATENT APPLICATION

(11) **EP 1 788 774 A1**
(43) Date of publication of application: **23.05.2007**
(21) Application number: 05292479.2
(22) Date of filing: 18.11.2005
(51) Int. Cl.: H04L 29/06, H04N 7/173

(54) **Method and system for initiating or recovering a media-on-demand session**

(71) Applicant: Alcatel Lucent, 75008 Paris (FR)
(72) Inventor: Kisel, Andrey, Berkshire SL 6 8 DH (GB); Robinson, David Cecil, Wiltshire SN8 2NP (GB); Molloy, Steve, Bristol BS8 3F (GB)
(74) Representative: Narmon, Gisèle Marie Thérèse

(57) **Abstract**

A method for initiating or recovering α media-on-demand session in α distributed media-on-demand network consisting of N streaming nodes (203 ... 204), the method having:
α . α first step wherein α client device (201) sends α setup request (251; 256) to α highly available redirector device (221) to request initiation or recovery of said session;
b. α second step wherein the redirector device (221) selects α streaming node (203; 204) for the session; and
c. α third step wherein the redirector device (221) instructs the client device (201) to use the selected media streaming node (203; 204) for that session.

A further distinctive feature is that the client device (201) requests media delivery from the selected media-streaming node either from the beginning (for initiation) or from the last position (for recovery).

## Description

### Field of the Invention

The present invention generally relates to resilient media-on-demand streaming in a distributed network, e.g. video-on-demand streaming (VoD) streaming in a distributed VoD network. In such a distributed media-on-demand network, N streaming nodes are each capable of streaming or delivering on-demand media assets to client devices, e.g. set top boxes (STBs) at the customer premises. In the context of this patent application, a streaming node means either a standalone streaming unit or alternatively a cluster of streaming units sharing the same content store or media asset server.

### Background of the Invention

An existing solution delivering reliable video-on-demand, even in the case of failure, of a video streaming unit is based upon the above described architecture where streaming nodes consist of several video streaming units that share the same content store and which are monitored through a software process, usually referred to as the resource manager, the fault manager or the cluster manager. This software process monitors the activity of all video streaming units in a single node for the purpose of assessing the unit's current state and transiting the video streaming to another streaming unit in case a currently used unit fails.

Typically, the existing solution requires monitoring the progress of each video-on-demand session and maintaining the session info in order to be able to recover and restart each video-on-demand session from a position in the session close to where the session failed. Such solutions that have monitoring software are for instance known from the company BitBand and are advertised through the Internet via http://www.bitband.com/.

A drawback of the existing architecture is that it can deliver reliable video-on-demand from a video cluster (or single node) only. Every cluster however has a single point of failure being the monitoring software process.

In an attempt to remove this single point of failure, one could think of introducing primary and secondary software monitoring processes, the secondary process monitoring the activity of all video streaming units in a node in case the primary process fails. If however also the secondary process fails, no reliable video delivery can be guaranteed.

Thus, having several monitoring processes to improve the reliability of existing VoD solutions, adds complexity and cost to the system, and makes the system only as resilient as the number of monitoring processes. It renders the VoD solution very expensive because high availability is required for monitoring processes on a per-cluster basis.

Further, the existing solution - even when upgraded with several monitoring processes - relies on maintaining session state information for each video-on-demand session. Each video streaming unit may handle a few hundred video sessions simultaneously. This state info has to be available to the monitoring process(es) in order to be able to recover and restart the video sessions on alternate video streaming units from the correct position in the video stream onwards. Maintaining such session state information and sharing it between primary and backup monitoring processes again adds to the complexity of the prior art video-on-demand solution or generally any media-on-demand solution. In case of a major failure, recovery of the state information is often not possible in the known systems because the state information is not kept in persistent storage.

An object of the present invention is to provide a method for reliably initiating or recovering a video-on-demand session without the above drawbacks of existing solutions, i.e. in particular avoiding a single point of failure, removing the need for complex and costly monitoring processes and removing the need for maintaining session state information for recovery.

### Summary of the Invention

The above outlined object of the present invention is realized by the method for media-on-demand session initiation and recovery described in claim 1, comprising:
a. a first step wherein a client device sends a setup request to a highly available redirector device to request initiation or recovery of the media-on-demand session;
b. a second step wherein the redirector device selects a media streaming node for the session; and
c. a third step wherein the redirector device instructs the client device to use the selected media streaming node for the session.

The object is further achieved by a redirector device used in the method according to the invention as defined in claim 9, and a client device used in the method according to the invention as defined in claim 11.

Indeed, by moving the decision logic to initiate or recover a media-on-demand session to the client device (e.g. the set-top box in case of VoD) and by implementing the recovery mechanism in a highly available control protocol redirector, the need for monitoring processes in streaming nodes has been removed, as well as the limitation to use cluster nodes only. Thus, the invention implements a resilient, load-balanced media-on-demand service in a distributed network without single point of failure. A media-on-demand system operating according to the principles of the current invention can tolerate a loss of a whole streaming node. In theory, it can even tolerate the loss of up to N-1 streaming nodes in a network with N streaming nodes.

Thanks to the fact that the client device is knowledgeable on the position in the media stream from where recovery is to be requested, there is no need to maintain session state information for each media-on-demand session in the monitoring process in order to be able to restart a failed session at the correct position in the media stream.

The current invention does not require high availability monitoring processes and therefore can be implemented on low cost general purpose computers. It has the additional advantage that it can scale up and down very easily because there is no inter-node communications involved. In general, the invention can be implemented on a cost-efficient, non-clustered hardware platform.

Optionally, the redirector device may maintain a state of health for the streaming nodes as defined by claim 2. This way, the redirector device can base its selection of a streaming node that has to handle a media-on-demand session on the condition of the streaming nodes. The redirector device in addition or alternately can take into account the content location as well as the streaming node's loading when determining which node to stream a particular media-on-demand session from.

One way to enable the redirector device to maintain a state of health is by regularly reporting heartbeats from the streaming nodes to the redirector device, as defined in claim 3. These heartbeats are preferably posted to highly available persistent storage as defined by claim 4. One particular incarnation of such highly available persistent storage is a Remote Database Management Server (RDBMS).

As expressed by claim 5, the client device may request playout of the media session from the beginning in case of an initial setup. In case of recovery of a failed session, the client may identify in the request from which position in the media session onwards the streaming has to restart. This is defined in claim 6.

Since the RTSP SETUP or PLAY methods have a feature that enables requesting play-out of a media asset from a given position inside the media asset, the RTSP SETUP message could serve as the client device's setup request according to the present invention. This optional implementation choice for the current invention has been defined in claim 7.

As expressed by claim 8, one way to implement the third step according to the present invention is by having the redirector device send back a redirect message to the client indicative for the streaming node to be used by the client device for the media-on-demand session delivery. As an alternative, the redirector device according to the current invention could for instance directly forward the client's request to the selected streaming node to initiate the delivery there.

### Brief Description of the Drawings

Fig. 1 illustrates a prior art video-on-demand session initiation method based on the RTSP protocol; and
Fig. 2 illustrates a distributed video-on-demand streaming network wherein an embodiment of the method according to the present invention is applied.

### Detailed Description of Embodiment(s)

Fig .1 shows interaction between a client device 101 (e.g. a set top box, STB, video codec, PC, TV, etc.) and a video server 102 during a video-on-demand delivery session as according to the prior art. Typically the video-on-demand session is initiated and managed using a control protocol. An industry standard control protocol for IPTV video delivery is the Real Time Streaming Protocol, abbreviated as RTSP, which is defined in IETF RFC 2326.

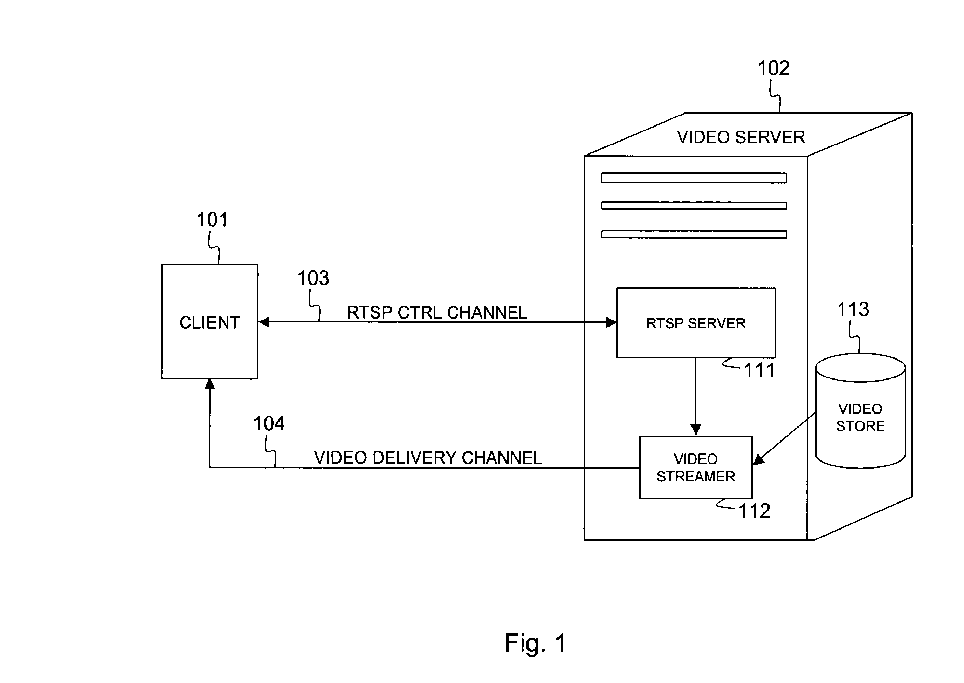

The control protocol server 111 on the video server' side listens to client commands on the control channel 103 between client 101 and video server 102 and instructs the video streamer 112 to perform basic video control operations, e.g. PLAY, PAUSE, FF, RW, STOP depending on the instructions received from the client 101. The video streamer 112 will receive the video programs from a video store 113 which by example is integrated in the video server 102, but alternatively could be a separated network device or a plurality of cooperating network devices each storing part of the video content. Clearly, if a single video streaming node is used as depicted in Fig. 1, the video delivery will be interrupted upon node failure.

In case the video-on-demand network consists of N (clustered, non-clustered or mixed) video streaming nodes, these streaming nodes are equipped with a monitoring process which add complexity to the nodes and become the single point of failure for each node.

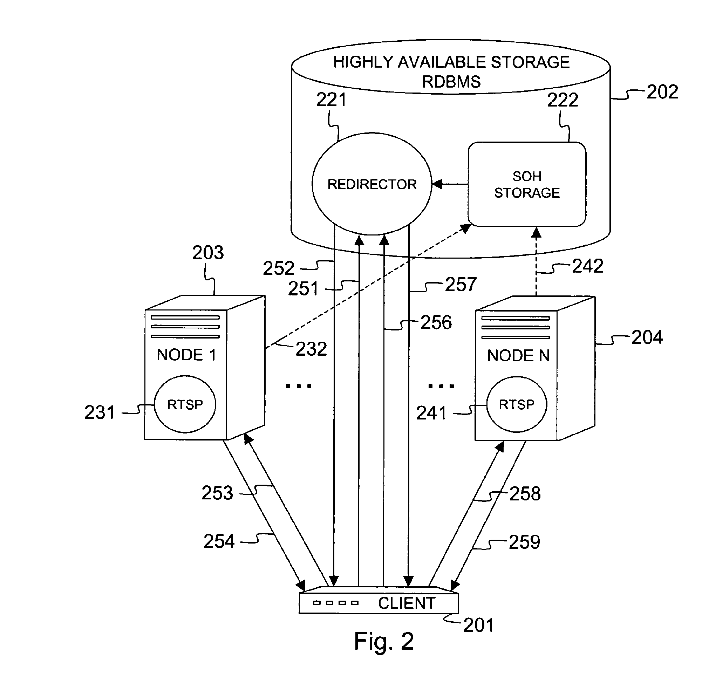

Fig. 2 illustrates the proposed method to implement resilient video delivery according to the present invention.

The main idea is to let the client device, 201 in Fig. 2, re-request video delivery whenever the currently streaming node fails. Such a recovery request - as well as the initial delivery request - is always sent to a control protocol redirector 221 and not to a particular node. The control protocol redirector 221 which forms the heart of the current invention selects the alternative video server to be used for recovery of the failed session and instructs the client 201 to use the selected video server. To instruct the client, the protocol redirector 221 may use for instance an RTSP class 300 redirect response which is tailored for the purpose of re-directing requests. The client 201 then sends its usual play request to the selected video server, requesting streaming from the position in the video program where the session failed rather than from the beginning of video asset. Each step in this process will be described in more detail in the following paragraphs.

To initiate an on-demand video delivery session, the client 201 in Fig. 2 sends an initial session setup request 251 to its initial point of contact which is the protocol redirector 221 (so not the video server). For the session setup request 251, client 201 may use the RTSP protocol. Alternatives are for instance the HTTP protocol or a proprietary protocol.

The redirector 221 is aware of the State Of Health (SOH) of each video streaming node 203 ... 204 because these video streaming nodes 203 ... 204 regularly report heartbeats to the SOH monitor 222 that is integrated with the protocol redirector 221 in a highly available, persistent storage of which Remote DataBase Management Server (RDBMS) 202 is one particular incarnation. The State Of Health (SOH) of each video streaming node in other words consists of the last heartbeat timestamp received by the SOH monitor 222. Based on the State Of Health of the different nodes, the protocol redirector 221 selects a node that will be used for streaming the video session to the client 201. In Fig. 2 it is for instance assumed that the protocol redirector 221 has chosen the first node 203 for streaming the video session requested by client 201 in request 251.

Thereupon, the redirector 221 uses the ability of the RTSP protocol to instruct client 201 to redirect the initial session setup request to the first node 203. This is illustrated by 252 in Fig. 2 which represents an RTSP 300 redirect response instructing client 201 to use node 203 for the video delivery. Again, alternatives for the RTSP protocol may be the HTTP protocol, proprietary protocols, etc.

The client 201 then sends the usual RTSP PLAY request 253 to the streaming node 203 identified in the redirect response 252 received from the protocol redirector 221. In the PLAY request 253, the client 201 requests playout of the video program from the beginning. Note that use of the RTSP protocol in the communication between client 201 and redirector 221 does not necessarily imply use of the RTSP protocol in the communication between client 201 and the streaming node 203 where the client 201 is redirected to. The current invention could be applied with different protocols, for instance RTSP between client 201 and redirector 221 and HTTP between client 201 and streaming node 203

The RTSP server 231 in streaming node 203 interprets the PLAY request 253 and starts streaming the requested video program to the client 201. This is indicated by arrow 254 in Fig. 2.

It is assumed then in Fig. 2 that streaming node 203 fails as a result of which the video delivery to client 201 is interrupted. The client 201 therefore sends a session recovery request 256 to the RTSP redirector 221 which now selects streaming node 204 for recovery of the failed session based on the State Of Health information.

The redirector device 221 again sends a redirection response message 257 to client device 201, this time instructing the client 201 to use streaming node 204.

The client 201 thereupon issues new RTSP PLAY request 258 and sends it over the control channel towards streaming node 204. The RTSP PLAY request identifies the same video asset but specifies that playout is requested from the position in the asset that corresponds to the position where the streaming from node 203 failed.

The RTSP server 241 in node 204 interprets this RTSP PLAY request and thereupon instructs the streaming logic inside node 204 to start streaming the interrupted video program to client 201 from the identified position onwards. This is indicated by arrow 259 in Fig. 2. The recovery mechanism according to the current invention in other words is also based on another feature of the RTSP control protocol (or eventual similar protocols which may be used), which is to request the play-out of a video asset from a given position inside the video asset.

Clearly, the proposed method removes the need to have monitoring processes on every video streaming node 203 ... 204 and removes the need to track the state of each video session in order to be able to restart a failed session at the correct position. Instead, it utilizes information already available on the client device 201, which is the current position of the video session. This allows the implementation of resilient video streaming using non-clustered video servers running on cost-efficient general-purpose computers.

The new method further does not have a single point of failure, which is the monitoring process itself running inside a clustered video streaming node in the prior art. It can tolerate the loss of N-1 streaming nodes in an N-node distributed video network, whereas existing solutions cannot tolerate the loss of a clustered or unclustered video streaming node.

Unlike the existing solutions, the new method can easily scale up and down because there is no inter-node communications involved. When a new video streaming node is added to the network it starts posting heartbeats to the persistent storage 222, thus enabling the control protocol redirector 221 to consider the new node for redirecting new client requests.

The invention can be implemented on low cost general purpose computers because it does not rely on high availability monitoring processes. It can be implemented on cost-efficient non-clustered hardware.

An additional benefit is the possibility for the RTSP redirector 221 to take into account content location as well as streaming node loading when determining which node to stream from. Hence users will only be redirected to streaming nodes that have the desired content loaded.

It is noted that since the main function of the RTSP redirector is just to select a video server based on the State Of Health information gathered in the persistent storage 222, there is no reason why it cannot run inside the same highly available persistent storage. For example, if RDBMS (e.g. Oracle RAC) is used to implement the highly available persistent storage, the RTSP redirector 221 can run inside it, thus making it highly available too.

Although the present invention has been illustrated by reference to specific embodiments, it will be apparent to those skilled in the art that various changes and modifications may be made within the spirit and scope of the invention. It is therefore contemplated to cover any and all modifications, variations or equivalents that fall within the spirit and scope of the basic underlying principles disclosed and claimed in this patent application. For example instead of the RTSP protocol, variant request protocol formats like SIP (Session Initiation Protocol), ITU's H.323 protocol, HTTP (Hypertext Transfer Protocol), IGMP (Internet Group Management Protocol) or enhanced versions of any of the foregoing protocols may be used to implement the current invention. Instead of the video content which is delivered on demand in the above described embodiment, other media assets may be delivered in an on-demand-system with distributed architecture implementing the current invention. Examples of other media assets are games, music, software, etc. The invention could be implemented in such systems with equal advantages. Instead of heartbeat reporting, other mechanisms may be implemented to inform the redirector device according to the current invention on the State Of Health of the video streaming nodes. As an example, the redirector device may for instance ping the streaming nodes to detect activity/non-activity thereof each time a client delivery request is received. Yet another possibility is that the streaming nodes open a socket for TCP/IP connection to the client, and as long as this connection is persistent, the streaming node is considered healthy. Further, some architectural choices may be different from what is depicted in Fig. 2. For instance, certain nodes may be implemented as clustered nodes having a plurality of streaming devices that share the load between them. Also the redirector and the State Of Health monitor may be separated instead of being integrated into a single high persistent database like RDBMS in Fig. 2. The redirector could be implemented as a lightweight, stateless software process, or alternatively it could be implemented in hardware, e.g. as application logic in a persistent database. Another location of the redirector could be inside an application server.

## Claims

1. Method for initiating or recovering a media-on-demand session in a distributed media-on-demand network consisting of N streaming nodes (203 ... 204),
**CHARACTERIZED IN THAT** said method comprises:
a. a first step wherein a client device (201) sends a setup request (251; 256) to a highly available redirector device (221) to request initiation or recovery of said session;
b. a second step wherein said redirector device (221) selects a streaming node (203; 204) for said session; and
c. a third step wherein said redirector device (221) instructs said client device (201) to use said streaming node (203; 204) for said session.

2. Method according to claim 1,
**CHARACTERIZED IN THAT** said redirector device (221) maintains or has access to a state of health of said N streaming nodes (203 ... 204), said state of health enabling selection of a streaming node in said second step.

3. Method according to claim 2,
**CHARACTERIZED IN THAT** said N streaming nodes (203 ... 204) regularly report heartbeats (232 ... 242) to said redirector device (221) in order to enable maintaining said state of health.

4. Method according to claim 3,
**CHARACTERIZED IN THAT** said heartbeats (232 ... 242) are posted to highly available persistent storage means (222) operationally integrated with said highly available redirector device (221).

5. Method according to claim 1,
**CHARACTERIZED IN THAT** said first step consists of sending a setup request (251) for playout of a media asset from the beginning of said media asset in case of initiating a session.

6. Method according to claim 1,
**CHARACTERIZED IN THAT** said first step consists of sending a setup request (256) for playout of a media asset from a position inside said media asset in case of recovering a session.

7. Method according to claim 1,
**CHARACTERIZED IN THAT** said setup request (251; 256) corresponds to an RTSP SETUP message.

8. Method according to claim 1,
**CHARACTERIZED IN THAT** said third step consists of sending a redirect message (252; 257) from said redirector device (221) to said client device (201), said redirect message (252; 257) being indicative for said streaming node (203; 204) selected.

9. A highly available redirector device (221) for use in a distributed media-on-demand network consisting of N streaming nodes (203 ... 204),
**CHARACTERIZED IN THAT** said redirector device (221) comprises:
a. receiving means for receiving from a client device (201) a setup request message (251; 256) to request initiation or recovery of a media-on-demand session;
b. selection means for selecting a streaming node (203; 204) for said session; and
c. instruction means for instructing said client device (201) to use said streaming node (203; 204) for said session.

10. A highly available redirector device (221) according to claim 9,
**CHARACTERIZED IN THAT** said redirector device (221) further is operationally coupled to:
d. highly available persistent storage means (222) for regularly receiving from said N streaming nodes (203 ... 204) state of health information (232 ... 242), said highly available persistent storage means (222) being operationally coupled to said selection means in said redirector device (221) in order to enable selecting said streaming node (203; 204) based on said state of health information.

11. A client device (201) for use in a distributed media-on-demand network consisting of N streaming nodes (203 ... 204),
**CHARACTERIZED IN THAT** said client device (201) comprises:
a. transmitting means for transmitting a setup request message (251; 256) to request initiation or recovery of a media-on-demand session to a highly available redirector device (221); and
b. receiving means for receiving from said redirector device (221) instructions (252; 257) indicative for the streaming node (203; 204) to be used for said session.
